# DEMANDE DE BREVET EUROPEEN

(11) **EP 1 065 866 A1**
(43) Date de publication de la demande: **03.01.2001**
(21) Numéro de dépôt: 00401735.6
(22) Date de dépôt: 19.06.2000
(51) Int. Cl.: H04M 3/38

(54) **Méthode et dispositif de contrôle d'accès à des services disponibles depuis un terminal de télécommunications**

(30) Priorité: 28.06.1999 FR 9908216
(71) Demandeur: ALCATEL, 75008 Paris (FR)
(72) Inventeur: Helaine, Hubert, 92800 Puteaux (FR)
(74) Mandataire: Lamoureux, Bernard

(57) **Abrégé**

L'invention concerne un dispositif de contrôle d'accès à au moins une prestation disponible à partir d'un terminal de télécommunications relié à un réseau de télécommunications, l'accès à la prestation étant soumis la souscription d'un abonnement. Le dispositif de contrôle comprend
- des moyens (7) de détection d'un refus d'accès à une prestation, opéré faute d'un abonnement souscrit à cette prestation,
- des moyens (15) de préparation d'un message électronique suite audit refus d'accès, le message contenant une identification de la prestation à laquelle l'accès a été refusé et une identification de l'abonnement permettant l'opération dudit terminal (1) avec le réseau de télécommunications auquel le terminal (1) est relié, et
- des moyens (19) d'envoi du message préparé à une unité (21) de suivi des tentatives d'accès à des prestations non souscrites.

## Description

La présente invention concerne un dispositif et un procédé de contrôle d'accès à au moins une prestation disponible à partir d'un terminal de télécommunications relié à un réseau de télécommunications et dont l'accès est soumis la souscription d'un abonnement.

On connaît notamment dans la téléphonie mobile et dans le domaine de l'INTERNET des téléphones et des ordinateurs qui peuvent être connectés à des applications d'un serveur distant.

Ainsi par exemple, il est connu d'interroger le solde de son compte sur Internet en se connectant sur le site Internet de sa banque et en composant son numéro de compte et un code confidentiel. De plus, il est possible de faire toutes sortes de transactions comme par exemple donner des ordres de virement ou commander des chéquiers.

Dans la radiotéléphonie, on a également accès à des applications d'un serveur distant pour par exemple connaître l'horaire des trains ou des avions en composant un numéro spécial de la société de transport choisie. De même, des interrogations bancaires et des transactions sont également possibles.

De plus, on connaît aussi des services réseau d'un réseau intelligent de télécommunication comme des boîtes vocales, un suivi d'appel ou le service réseau permettant une conférence à trois.

Ces prestations, c'est-à-dire les applications et les services réseau intelligent mentionnés ci-dessus, sont disponibles à partir d'un terminal de télécommunications et sont souvent soumises au paiement d'une somme d'argent au titre d'un abonnement autorisant l'accès à la prestation.

Dans la plupart des cas, le terminal de télécommunications comporte une mémoire contenant déjà des commandes ou des adresses d'accès, telles que des adresses IP pour l'Internet ou des numéros de téléphone, pour accéder à ces prestations.

Toutefois, il arrive fréquemment qu'un utilisateur d'un terminal de télécommunications souhaite, par besoin ou simple curiosité, accéder à une prestation, par exemple en composant un numéro de téléphone préenregistré bien qu'il n'ait pas souscrit un abonnement pour cette prestation. Dans ce cas, l'accès à cette prestation est refusé. Mais le fournisseur de la prestation tel que l'opérateur téléphonique pour les services réseaux ou le propriétaire du serveur d'applications pour les applications distantes, n'a aucun renseignement sur la tentative d'accès de l'utilisateur, car il n'existe actuellement aucun moyen technique pour accéder à cette information concernant les tentatives d'accès à des prestations non souscrites.

Pour pallier cet inconvénient, la présente invention propose un moyen technique qui permette par le contrôle d'accès d'un terminal de télécommunications à une prestation de connaître les tentatives d'accès à des prestations non souscrites.

A cet effet, l'invention a pour objet un dispositif de contrôle d'accès à au moins une prestation disponible à partir d'un terminal de télécommunications relié à un réseau de télécommunications, l'accès à la prestation étant soumis la souscription d'un abonnement, caractérisé en ce qu'il comprend
- des moyens de détection d'un refus d'accès à une prestation, opéré faute d'un abonnement souscrit à cette prestation,
- des moyens de préparation d'un message électronique suite audit refus d'accès, le message contenant une identification de la prestation à laquelle l'accès a été refusé et une identification de l'abonnement permettant l'opération dudit terminal avec le réseau de télécommunications auquel le terminal est relié, et
   - des moyens d'envoi du message préparé à une unité de suivi des tentatives d'accès à des prestations non souscrites.

Le dispositif peut comporter l'une ou plusieurs des caractéristiques suivantes :
- les moyens de détection d'un refus d'accès comprennent une mémoire contenant des informations d'autorisation et de refus d'accès auxdites prestations et des moyens de comparaison entre ces informations d'autorisation et de refus d'accès et l'identification d'une prestation à laquelle l'utilisateur d'un terminal souhaite accéder, les moyens de comparaison délivrant un signal de refus d'accès auxdits moyens de préparation d'un_ message électronique dans le cas d'une tentative d'accès à une prestation non souscrite,
- il comprend en outre des moyens d'accumulation d'un nombre prédéfini de messages préparés, les moyens d'accumulation commandant l'envoi desdits messages lorsque le nombre prédéfini de messages pouvant être accumulés est atteint,
- il comprend des moyens de stockage temporaire d'un message préparé, les moyens de stockage temporaire commandant l'envoi desdits messages après écoulement d'un intervalle de temps prédéfini,
- les messages électroniques possèdent un format correspondant à un format prédéfini du réseau de télécommunication pour la transmission de données,
- le format prédéfini du réseau de télécommunication pour la transmission de données est un format SMS ou un format USSD,
- au moins une des prestations est un service réseau du réseau de télécommunications,
- au moins une des prestations est une application distante d'un serveur distant d'applications.

L'invention a en outre pour objet un terminal de télécommunications, caractérisé en ce qu'il comprend un dispositif tel que défini ci-dessus.

Le terminal selon l'invention peut comporter une ou plusieurs des caractéristiques suivantes :
- il est un ordinateur équipé d'un modem relié à un réseau de télécommunications, tel qu'un réseau téléphonique ou un réseau informatique,
- il est un téléphone, en particulier un téléphone mobile, dont l'utilisation est conditionnée à la fourniture d'un support d'informations contenant des informations d'identification d'abonné au réseau de télécommunications, et le support d'informations comprend une mémoire contenant des commandes ou adresses d'accès à des prestations préenregistrées, l'identification de celles-ci et des informations d'autorisation ou de refus d'accès à ces prestations,
- les moyens de détection d'un refus d'accès sont compris dans le support d'informations,
- le support d'informations est une carte à puce présentant les fonctionnalités de la norme GSM11.14 relatif au "SIM TOOL KIT" et lesdits moyens de détection d'un refus font appel à la procédure de contrôle d'appel définie dans cette norme.

Par ailleurs, l'invention a pour objet un procédé de contrôle d'accès à au moins une prestation disponible à partir d'un terminal de télécommunications relié à un réseau de télécommunications, l'accès à la prestation étant soumis la souscription d'un abonnement, caractérisé en ce qu'il comprend les étapes consistant
- à détecter un refus d'accès à une prestation, opéré faute d'un abonnement souscrit à cette prestation,
- à préparer un message électronique suite audit refus d'accès, le message contenant une identification de la prestation à laquelle l'accès a été refusé et une identification de l'abonnement permettant l'opération dudit terminal avec le réseau de télécommunications auquel le terminal est relié, et
- à envoyer le message préparé à une unité de suivi des tentatives d'accès à des prestations non souscrites.

Le procédé selon l'invention peut comporter une ou plusieurs des caractéristiques suivantes :
- lors de l'étape de détection d'un refus d'accès, on compare des informations d'autorisation et de refus d'accès avec l'identification d'une prestation à laquelle l'utilisateur d'un terminal souhaite accéder, et on délivre un signal de refus d'accès en cas d'une tentative d'accès à une prestation non-souscrite,
- on accumule un nombre prédéfini de messages préparés, et en ce que l'on commande l'envoi desdits messages lorsque le nombre prédéfini de messages accumulés est atteint,
- on stocke temporairement un message préparé, et l'on commande l'envoi desdits messages après écoulement d'un intervalle de temps prédéfini,
- les messages électroniques possèdent un format correspondant à un format prédéfini du réseau de télécommunication pour la transmission de données,
- le format prédéfini du réseau de télécommunication pour la transmission de données est un format SMS ou un format USSD,
- au moins une des prestations est un service réseau du réseau de télécommunications,
- au moins une des prestations est une application distante d'un serveur distant d'applications.

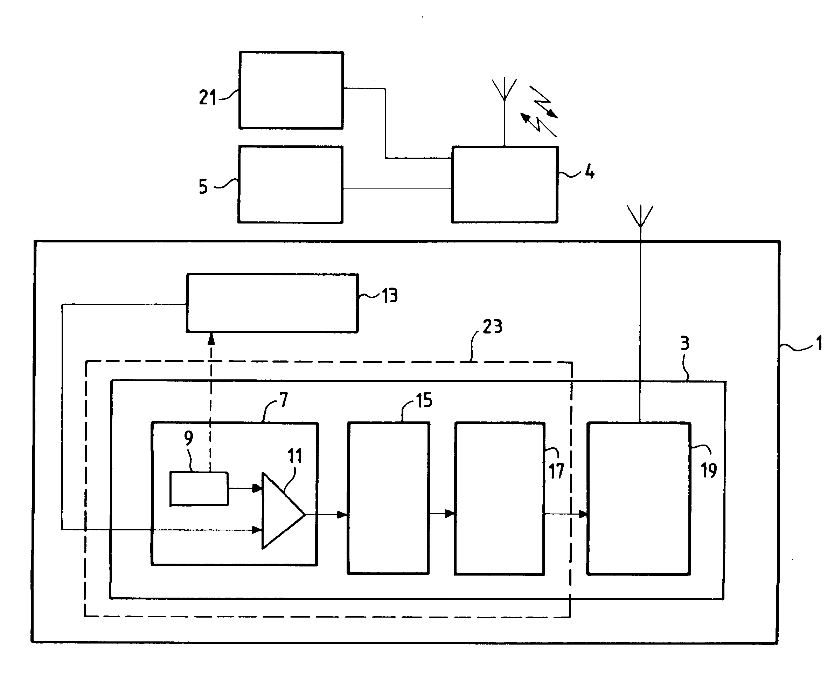

D'autres caractéristiques et avantages de l'invention ressortiront de la description suivante, donnée à titre d'exemple, sans caractère limitatif, en regard du dessin annexé montrant un schéma synoptique d'un terminal de télécommunications selon l'invention.

La figure unique montre, selon un schéma synoptique, un terminal 1 de télécommunications comprenant un dispositif 3 de contrôle d'accès à au moins une prestation disponible à partir du terminal 1 et dont l'accès est soumis à la souscription d'un abonnement.

Par prestation, on entend aussi bien une application distante disponible au niveau d'un serveur distant 5 d'application, qu'un service réseau d'un réseau intelligent de télécommunications comme une boîte vocale, un suivi d'appel ou le service réseau permettant une conférence à trois.

Le terminal 1 de télécommunications est par exemple un téléphone, en particulier un téléphone mobile.

Selon une variante avantageuse, le terminal 1 de télécommunication peut également être un ordinateur équipé d'un modem relié à un réseau de télécommunications, tel qu'un réseau téléphonique ou un réseau informatique comme le réseau INTERNET.

Ce terminal est relié à un réseau 4 de télécommunications et par l'intermédiaire de celui-ci au serveur distant 5. Sur la figure, on a représenté un réseau de radio-télécommunications mais un réseau de télécommunications filaire est, bien entendu, également envisageable.

Avantageusement, ce réseau 4 de télécommunications possède la particularité de pouvoir fournir des services réseau tels que mentionnés ci-dessus. Il s'agit d'un réseau de télécommunications dit "intelligent".

De préférence, l'utilisation du terminal de télécommunications est conditionnée à la fourniture d'informations d'identification d'abonné au réseau de télécommunications auquel le terminal 1 est relié.

Ces informations d'identification d'abonné peuvent par exemple être fournies par l'intermédiaire d'un support d'informations, tel qu'une carte à puce communément connue au nom de carte SIM pour "Subcriber Identity Module" en anglais, contenant des informations d'identification d'abonné au réseau de télécommunications.

Le serveur distant 5 d'application est un serveur informatique contenant par exemple une banque de données, des logiciels etc.

Chacune des applications du serveur 5 possède une adresse spécifique de connexion. Cette adresse peut être un simple numéro de téléphone ou une adresse Internet.

Le dispositif 3 de contrôle d'accès du terminal 1 à des prestations du réseau 4 de télécommunications ou du serveur 5 comprend des moyens 7 de détection d'un refus d'accès à une prestation, les moyens 7 détectant seulement des refus d'accès opérés faute d'un abonnement souscrit à cette prestation.

A cet effet, les moyens 7 de détection comprennent une mémoire 9 contenant des informations d'autorisation et de refus d'accès aux prestations du réseau 4 de télécommunication ou du serveur 5 et des moyens 11 de comparaison entre ces informations d'autorisation et de refus d'accès et l'identification d'une prestation dont un utilisateur du terminal souhaite bénéficier.

Les informations sur d'une part les prestations telles que leurs identifications et leurs commandes d'activation en ce qui concerne les services réseau ou les adresses d'accès de connexion en ce qui concerne les applications distantes, et sur d'autre part l'autorisation ou le refus d'accès peuvent par exemple être chargées dans la mémoire 9 lors de la prise de l'abonnement auprès de l'opérateur du réseau de télécommunications auquel le terminal 1 est relié, ou être chargées à distance lorsque l'utilisateur du terminal 1 souscrit par exemple à un nouvel abonnement.

Les moyens de comparaison comprennent donc deux entrées dont l'une est reliée à la mémoire 9 et dont l'autre est par exemple reliée à des moyens 13 de sélection d'une prestation en vue d'un accès à celle-ci. Avantageusement, les moyens 13 de sélection sont également reliés à la mémoire 9 fournissant à ces moyens 13 des informations d'identification sur les prestations du réseau 4 de télécommunications ou du serveur distant 5. Les moyens 13 sont par exemple formés par un afficheur du terminal 1 et un bouton de sélection.

La sortie des moyens 11 de comparaison est reliée à l'entrée de moyens 15 de préparation d'un message électronique suite à un refus d'accès opéré faute d'un abonnement souscrit à la prestation choisie par l'utilisateur.

Les moyens 15 préparent un message électronique contenant une identification de la prestation à laquelle l'accès a été refusé et une identification de l'abonnement permettant l'opération dudit terminal avec le réseau de télécommunications auquel le terminal est relié, donc l'abonnement souscrit auprès de l'opérateur du réseau de télécommunications. Cet abonnement servira à identifier l'utilisateur qui a essayé d'accéder à une prestation afin de pouvoir lui proposer la souscription d'un abonnement à la prestation à laquelle il a souhaité se connecter.

Le format des messages électroniques est de préférence un format prédéfini du réseau de télécommunication pour la transmission de données. Dans le cas d'un réseau de radiotéléphonie, ce format prédéfini est avantageusement un format SMS ( "Short message service" pour service de messages courts en anglais) ou un format USSD ("Unstructured Supplementary Service Data" pour service supplémentaire non structuré de données).

La sortie des moyens 15 de préparation d'un message est reliée à l'entrée de moyens 17 d'accumulation d'un nombre prédéfini de messages préparés.

Selon un développement, on envisage de regrouper tous les messages ainsi préparés dans un seul paquet de données avant d'être envoyés par des moyens 19 d'envoi du terminal 1 à une unité 21 de suivi des tentatives de connexion à des prestations non souscrites.

Selon une variante non représentée, le dispositif 3 ne comporte pas de moyens 17 d'accumulation de messages et ceux-ci sont directement envoyés par les moyens 19 d'envoi.

Selon encore une autre variante non représentée, les moyens 17 d'accumulation sont remplacés par des moyens de stockage temporaire d'un message préparé. Ces moyens de stockage commandent l'envoi desdits messages après écoulement d'un intervalle de temps prédéfini ou à un moment prédéfini, par exemple pendant la nuit où le réseau de télécommunications est moins sollicité.

Avantageusement, les moyens 7, 15 et 17 sont intégrés dans un support d'informations 23 telle qu'une carte à puce.

De préférence, cette carte à puce est une carte SIM et présente les fonctionnalités de la norme GSM11.14 relatif au "SIM TOOL KIT" de sorte que lesdits moyens 7 de détection d'un refus puissent faire appel à la procédure de contrôle d'appel définie dans cette norme.

On décrira ci-après le fonctionnement du terminal 1 et du dispositif 3 selon l'invention.

Lorsque l'utilisateur souhaite accéder à une prestation du réseau de télécommunications ou du serveur 5, il sélectionne d'abord une prestation dans une liste, par exemple affichée sur un afficheur du terminal 1, à l'aide des moyens 13 de sélection. La liste affichée contient non seulement des prestations auquel l'utilisateur a souscrit, mais aussi des prestations pour lesquelles l'utilisateur n'a pas souscrit un abonnement.

On suppose par la suite, que l'utilisateur a choisi par curiosité une application pour laquelle il n'a pas souscrit un abonnement.

Dans ce cas, les moyens 11 de comparaison délivrent un signal de refus d'accès auxdits moyens 15 de préparation d'un message électronique.

A la réception du signal de refus de connexion, les moyens 15 préparent un message électronique contenant une identification de l'application à laquelle l'accès a été refusé et une identification de l'abonnement permettant l'opération dudit terminal avec le réseau de télécommunications auquel le terminal est relié.

Avantageusement, on accumule dans les moyens 17 un nombre prédéfini de messages avant de les envoyer par l'intermédiaire des moyens 19 d'envoi à l'unité de suivi 21. Les moyens 17 d'accumulation commandant l'envoi desdits messages lorsque le nombre prédéfini de messages pouvant être accumulés est atteint.

Selon une variante, on envoie les messages électroniques directement par l'intermédiaire des moyens 19 vers l'unité 21.

Selon une autre variante, on stocke les messages électroniques temporairement et on les envoie après écoulement d'un intervalle de temps prédéfini.

En exploitant les messages électroniques reçus par l'unité 21 de suivi, on peut connaître les applications et, par l'identification de l'abonnement auprès de l'opérateur du réseau de télécommunications, l'identité de l'utilisateur qui a tenté d'accéder à une prestation pour laquelle il n'a pas encore souscrit d'abonnement. Ceci permet d'améliorer sensiblement la_ qualité de service de l'opérateur du réseau de télécommunications et celui du serveur distant, car grâce à l'invention, il connaît mieux les besoins des utilisateurs et est en mesure de leur proposer un abonnement.

## Revendications

1. Dispositif de contrôle d'accès à au moins une prestation disponible à partir d'un terminal de télécommunications relié à un réseau de télécommunications, l'accès à la prestation étant soumis la souscription d'un abonnement, caractérisé en ce qu'il comprend
- des moyens (7) de détection d'un refus d'accès à une prestation, opéré faute d'un abonnement souscrit à cette prestation,
- des moyens (15) de préparation d'un message électronique suite audit-refus d'accès, le message contenant une identification de la prestation à laquelle l'accès a été refusé et une identification de l'abonnement permettant l'opération dudit terminal (1) avec le réseau de télécommunications auquel le terminal (1) est relié, et
- des moyens (19) d'envoi du message préparé à une unité (21) de suivi des tentatives d'accès à des prestations non souscrites.

2. Dispositif selon la revendication 1, caractérisé en ce que les moyens (7) de détection d'un refus d'accès comprennent une mémoire (9) contenant des informations d'autorisation et de refus d'accès auxdites prestations et des moyens (11) de comparaison entre ces informations d'autorisation et de refus d'accès et l'identification d'une prestation à laquelle l'utilisateur d'un terminal souhaite accéder, les moyens (11) de comparaison délivrant un signal de refus d'accès auxdits moyens (15) de préparation d'un message électronique dans le cas d'une tentative d'accès à une prestation non souscrite.

3. Dispositif selon la revendication 1 ou 2, caractérisé en ce qu'il comprend en outre des moyens (17) d'accumulation d'un nombre prédéfini de messages préparés, les moyens (17) d'accumulation commandant l'envoi desdits messages lorsque le nombre prédéfini de messages pouvant être accumulés est atteint.

4. Dispositif selon la revendication 1 ou 2, caractérisé en ce qu'il comprend des moyens de stockage temporaire d'un message préparé, les moyens de stockage temporaire commandant l'envoi desdits messages après écoulement d'un intervalle de temps prédéfini.

5. Dispositif selon l'une quelconque des revendications 1 à 4, caractérisé en ce que les messages électroniques possèdent un format correspondant à un format prédéfini du réseau de télécommunication pour la transmission de données.

6. Dispositif selon la revendication 5, caractérisé en ce que le format prédéfini du réseau de télécommunication pour la transmission de données est un format SMS ou un format USSD.

7. Dispositif selon l'une quelconque des revendications 1 à 6, caractérisé en ce qu'au moins une des prestations est un service réseau du réseau de télécommunications.

8. Dispositif selon l'une quelconque des revendications 1 à 7, caractérisé en ce qu'au moins une des prestations est une application distante d'un serveur distant d'applications.

9. Terminal (1) de télécommunications, caractérisé en ce qu'il comprend un dispositif selon l'une quelconque des revendications 1 à 8.

10. Terminal selon la revendication 9, caractérisé en ce qu'il est un ordinateur équipé d'un modem relié à un réseau de télécommunications, tel qu'un réseau téléphonique ou un réseau informatique.

11. Terminal (1) selon la revendication 9, caractérisé en ce qu'il est un téléphone, en particulier un téléphone mobile, dont l'utilisation est conditionnée à la fourniture d'un support d'informations (23) contenant des informations d'identification d'abonné au réseau de télécommunications, et en ce que le support d'informations comprend une mémoire (9) contenant des commandes ou des adresses d'accès à des prestations préenregistrées, l'identification de celles-ci et des informations d'autorisation ou de refus d'accès à ces prestations.

12. Terminal selon la revendication 11, caractérisé en ce que les moyens (7) de détection d'un refus d'accès sont compris dans le support d'informations.

13. Terminal selon la revendication 12, caractérisé en ce que le support d'informations (23) est une carte à puce présentant les fonctionnalités de la norme GSM11.14 relatif au "SIM TOOL KIT" et en ce que lesdits moyens (7) de détection d'un refus font appel à la procédure de contrôle d'appel définie dans cette norme.

14. Procédé de contrôle d'accès à au moins une prestation disponible à partir d'un terminal de télécommunications relié à un réseau de télécommunications, l'accès à la prestation étant soumis la souscription d'un abonnement, caractérisé en ce qu'il comprend les étapes consistant
- à détecter un refus d'accès à une prestation, opéré faute d'un abonnement souscrit à cette prestation,
- à préparer un message électronique suite audit refus d'accès, le message contenant une identification de la prestation à laquelle l'accès a été refusé et une identification de l'abonnement permettant l'opération dudit terminal (1) avec le réseau de télécommunications auquel le terminal est relié, et
- à envoyer le message préparé à une unité (21) de suivi des tentatives d'accès à des prestations non souscrites.

15. Procédé selon la revendication 14, caractérisé en ce que lors de l'étape de détection d'un refus d'accès, on compare des informations d'autorisation et de refus d'accès avec l'identification d'une prestation à laquelle l'utilisateur d'un terminal (1) souhaite accéder, et on délivre un signal de refus d'accès en cas d'une tentative d'accès à une prestation non-souscrite.

16. Procédé selon la revendication 14 ou 15, caractérisé en ce que l'on accumule un nombre prédéfini de messages préparés, et en ce que l'on commande l'envoi desdits messages lorsque le nombre prédéfini de messages accumulés est atteint.

17. Procédé selon la revendication 14 ou 15, caractérisé en ce que l'on stocke temporairement un message préparé, et en ce que l'on commande l'envoi desdits messages après écoulement d'un intervalle de temps prédéfini.

18. Procédé selon l'une quelconque des revendications 14 à 17, caractérisé en ce que les messages électroniques possèdent un format correspondant à un format prédéfini du réseau de télécommunication pour la transmission de données.

19. Procédé selon la revendication 18, caractérisé en ce que le format prédéfini du réseau de télécommunication pour la transmission de données est un format SMS ou un format USSD.

20. Procédé selon l'une quelconque des revendications 14 à 19, caractérisé en ce qu'au moins une des prestations est un service réseau du réseau de télécommunications.

21. Procédé selon l'une quelconque des revendications 14 à 20, caractérisé en ce qu'au moins une des prestations est une application distante d'un serveur distant d'applications.
